# NEUE EUROPÄISCHE PATENTSCHRIFT

(11) **EP 2 994 661 B2**
(45) Veröffentlichungstag und Bekanntmachung des Hinweises auf die Entscheidung über den Einspruch: **26.01.2022**
(45) Hinweis auf die Patenterteilung: 27.12.2017
(21) Anmeldenummer: 14729582.8
(22) Anmeldetag: 30.04.2014
(51) Int. Cl.: F16D 13/64

(54) **KUPPLUNG MIT REDUZIERTEM SCHLEPPMOMENT**
CLUTCH HAVING REDUCED DRAG TORQUE
EMBRAYAGE À COUPLE DE FREINAGE RÉDUIT

(30) Priorität: 06.05.2013 DE 102013208196
(43) Veröffentlichungstag der Anmeldung: 16.03.2016
(73) Patentinhaber: Schaeffler Technologies AG & Co. KG, 91074 Herzogenaurach (DE)
(72) Erfinder: GÜLLÜK, Toros, 77839 Lichtenau (DE); MAIENSCHEIN, Stephan, 76534 Baden-Baden (DE)
(74) Vertreter: Winter, Brandl - Partnerschaft mbB
(86) Internationale Anmeldenummer: PCT/DE2014/200193
(87) Internationale Veröffentlichungsnummer: WO 2014/180478

(56) Entgegenhaltungen:
- EP-A1- 2 136 096
- US-A- 4 287 978
- US-B1- 6 293 382

## Beschreibung

Die vorliegende Erfindung betrifft eine Kupplung für einen Antriebsstrang eines Kraftfahrzeugs, mit deren Hilfe eine Drehmomentübertragung von einer Verbrennungskraftmaschine zu einem Getriebe bedarfsweise unterbrochen werden kann.

Aus dem Stand der Technik sind nasslaufende Kupplungen bekannt, bei denen Außenlamellen und Innenlamellen in einem öldichten Gehäuse angeordnet sind. Das Gehäuse ist von (Getriebe-)Öl durchströmbar, so dass durch Reibarbeit in die Kupplung eingebrachte Energie durch das (Getriebe-)Öl abführbar ist. Solche Kupplungen werden geschlossen, indem die Außenlamellen und die Innenlamellen in einer axialen Richtung aufeinander gepresst werden, so dass zwischen diesen eine kraftschlüssige Verbindung besteht. Zum Öffnen der Kupplung werden die Außenlamellen und die Innenlamellen in der axialen Richtung voneinander wegbewegt. Nachteilig an den bekannten Kupplungen ist, dass bei offener Kupplung hohe Schleppmomente durch sich aneinander anlegender benachbarter Reiblamellen entstehen, die wiederum zu einer hohen Verlustleistung und zu einem erhöhten Verschleiß führen.

Solche Kupplungslamellen sind aus der US 6 293 382; EP 2 136 096 oder US 4 287 978 bekannt. Aufgabe der Erfindung ist es daher, die mit Bezug auf den Stand der Technik geschilderten Probleme zumindest teilweise zu lösen und insbesondere eine Kupplung für einen Antriebsstrang eines Kraftfahrzeugs anzugeben, die sich durch geringere Schleppmomente und eine geringere Verlustleistung bei offener Kupplung sowie einen reduzierten Verschleiß auszeichnet. Darüber hinaus soll auch ein Kraftfahrzeug mit einem Antriebsmotor und einer Kupplung angegeben werden, die sich durch geringere Schleppmomente und eine geringere Verlustleistung bei offener Kupplung sowie einen reduzierten Verschleiß auszeichnet.

Diese Aufgaben werden gelöst mit einer Kupplung und einem Kraftfahrzeug gemäß den Merkmalen der unabhängigen Patentansprüche, insbesondere Patentanspruch 1 und 9. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die erfindungsgemäße Kupplung für einen Antriebsstrang eines Kraftfahrzeugs weist eine Trägerlamelle mit zumindest einem Reibbelag auf, wobei der zumindest eine Reibbelag in einer radialen Richtung der Trägerlamelle eine Innenkante und eine Außenkante sowie in einer Umfangsrichtung der Trägerlamelle eine Anströmkante und eine Abströmkante aufweist, wobei eine erste Länge der Anströmkante in der radialen Richtung größer ist als eine zweite Länge der Abströmkante in der radialen Richtung und wobei die Innenkante mit der Umfangsrichtung einen Winkel α bildet, wobei die Innenkante zumindest teilweise eine erste Prägung aufweist oder die Außenkante zumindest teilweise eine zweite Prägung aufweist.

Antriebsmotoren von Fahrzeugen weisen regelmäßig eine Mindestdrehzahl (Leerlaufdrehzahl) auf. Zum Anfahren aus dem Fahrzeugstillstand muss eine Drehzahllücke zwischen einer niedrigsten Motorbetriebsdrehzahl und einer stillstehenden Getriebeeingangswelle durch eine Kupplung geschlossen werden. Die Kupplung dient weiterhin während Schaltvorgängen der Unterbrechung einer Drehmomentübertragung von einem Schwungrad der Verbrennungskraftmaschine auf ein Getriebe. Bei der hier vorgeschlagenen Kupplung kann es sich beispielsweise um eine nasslaufende Kupplung, eine (nasslaufende) Wandlerüberbrückungskupplung, eine (nasslaufende) Doppelkupplung oder eine (nasslaufende) Lamellenkupplung in einem Automatikgetriebe handeln. Unter nasslaufend ist hier zu verstehen, dass ein Gehäuse der Kupplung mit (Getriebe-)Öl durchströmbar ist, so dass durch Reibarbeit in die Kupplung eingebrachte Energie durch das (Getriebe-)Öl abführbar ist.

Die Kupplung weist mindestens eine Trägerlamelle mit zumindest einem Reibbelag auf. Die Trägerlamelle ist bevorzugt aus Metall gefertigt und ringförmig ausgebildet. Üblicherweise weist die Trägerlamelle eine Mehrzahl von Reibbelägen auf, beispielsweise 10 bis 20 Reibbeläge, die an einem Rand der Trägerlamelle in einer Umfangsrichtung gleichmäßig verteilt sind. Bei der Trägerlamelle handelt es sich insbesondere um eine Innenlamelle oder Kupplungsscheibe der Kupplung, die in einer axialen Richtung in Richtung mindestens einer Außenlamelle der Kupplung verstellbar ist. Zwischen der Trägerlamelle und der mindestens einen Außenlamelle ist eine kraftschlüssige Verbindung herstellbar, so dass über die Trägerlamelle und die mindestens eine Außenlamelle ein Drehmoment eines Antriebsmotors auf ein Getriebe übertragbar ist.

Bei dem zumindest einen Reibbelag handelt es sich um eine Fläche der Trägerlamelle, mit der die Trägerlamelle bei geschlossener Kupplung an der mindestens einen Außenlamelle anliegt. Der zumindest eine Reibbelag kann auch als separates Bauteil, beispielsweise nach Art eines Belagpads, ausgebildet und an der Trägerlamelle befestigt sein. Der zumindest eine Reibbelag weist in einer radialen Richtung der Trägerlamelle eine Innenkante und eine Außenkante sowie in der Umfangsrichtung der Trägerlamelle eine Anströmkante und eine Abströmkante für (Getriebe-)Öl auf. Beim Betrieb der Kupplung und Rotation der Trägerlamelle strömt das (Getriebe-)Öl auf die Anströmkante des zumindest einen Reibbelags zu und über die Abströmkante des zumindest einen Reibbelags von dem zumindest einen Reibbelag wieder ab. Eine erste Länge der Anströmkante in der radialen Richtung ist größer als eine zweite Länge der Abströmkante in der radialen Richtung. Dies bedeutet insbesondere, dass sich die Innenkante entgegen einer Drehrichtung der Trägerlamelle radial nach außen erstreckt. Weiterhin bedeutet dies, dass sich eine Länge des zumindest einen Reibbelags in der radialen Richtung entgegen einer Drehrichtung der Trägerlamelle verringert. Zudem bedeutet dies, dass eine Ecke zwischen der Innenkante und der Abströmkante radial weiter außen liegt, als eine Ecke zwischen der Anströmkante und der Innenkante. Die Innenkante weist bevorzugt einen geraden, konkaven und/oder konvexen Verlauf auf.

Die Innenkante bildet mit der Umfangsrichtung darüber hinaus einen Winkel α, der bevorzugt 5° - 45° und besonders bevorzugt 5° - 25° aufweist. Durch die erfindungsgemäße Ausgestaltung der Innenkante des zumindest einen Reibbelags, d.h. gem. Anspruch 1, wird eine Anströmbahn des (Getriebe-)Öls für eine Anströmung der Anströmkante eines benachbarten Reibbelags freigehalten oder zumindest die Anströmung der Anströmkante des benachbarten Reibbelags weniger behindert. Weiterhin wird ein Einströmen des (Getriebe-)Öls zwischen den zumindest einen Reibbelag und einer benachbarten Reiblamelle stark begünstigt. Bei offener Kupplung werden benachbarte Lamellen mit Hilfe der kinetischen Energie des den zumindest einen Reibbelag anströmenden (Getriebe-)Öls voneinander getrennt. Hierdurch reduzieren sich die Schleppmomente und die mit ihnen einhergehenden Verlustwärmeleistungen bei offener Kupplung.

Besonders vorteilhaft ist es, wenn die Anströmkante zumindest teilweise eine erste Anschrägung aufweist. Unter der ersten Anschrägung ist insbesondere eine abgeschrägte Fläche der Anströmkante zu verstehen, beispielsweise nach Art einer Fase, so dass der zumindest eine Reibbelag im Bereich der Anströmkante bevorzugt keilförmig ausgebildet ist. Bevorzugt erstreckt sich die erste Anschrägung in der radialen Richtung der Trägerlamelle über die gesamte Länge der Anströmkante. Hierdurch prallt das anströmende (Getriebe -) Öl nicht frontal auf die Anströmkante, wodurch eine Laminierung des Reibbelags entgegengewirkt wird. Vielmehr wird die keilförmig ausgeformte Anströmkante durch das anströmende (Getriebe-)Öl auf die Trägerlamelle gedrückt und damit eine Ablösung des zumindest einen Reibbelags von der Trägerlamelle verhindert. Messungen haben zudem gezeigt, dass durch die Anschrägung der Anströmkante die Schleppmomente und die mit ihnen einhergehenden Verlustwärmeleistungen bei offener Kupplung um ca. 50 % reduziert werden können.

Ebenfalls vorteilhaft ist es wenn die erste Anschrägung mit der Umfangsrichtung einen Winkel β bildet. Der Winkel β beträgt bevorzugt 10° - 80° besonders bevorzugt 20° - 60° und ganz besonders bevorzugt 25° - 45° auf.

Ferner ist es vorteilhaft, wenn die erste Anschrägung in der radialen Richtung einen variablen Verlauf aufweist. Unter variablen Verlauf ist hier zu verstehen, dass sich beispielsweise der Winkel β in der radialen Richtung entlang der Anströmkante verringert und/oder sich in der radialen Richtung entlang der Anströmkante vergrößert. Hierdurch kann die Anströmbahn des (Getriebe-) Öls weiter optimiert werden.

Zudem ist es vorteilhaft, wenn die erste Anschrägung einen Sockel aufweist. Unter einem Sockel ist hier ein Bereich der Anströmkante zu verstehen, der sich in Richtung der Trägerlamelle unterhalb der ersten Anschrägung befindet. Der Sockel verleiht der Anströmkante Stabilität. Die Innenkante weist zumindest teilweise eine erste Prägung und/oder die Außenkante zumindest teilweise eine zweite Prägung auf.

Die erste Prägung und/oder die zweite Prägung können beispielsweise entsprechend der ersten Anschrägung der Anströmkante ausgebildet sein. Die erste Prägung und oder zweite Prägung vergrößern sich erfindungsgemäß entgegen der Drehrichtung der Trägerlamelle.

Vorzugsweise verlaufen die Abströmkante eines ersten Reibbelags und die Anströmkante eines benachbarten zweiten Reibbelags parallel zueinander und parallel zu der radialen Richtung.

Ebenfalls vorteilhaft ist es wenn Ecken des zumindest einen Reibbelags zwischen der Innenkante und der Anströmkante oder zwischen der Anströmkante und der Außenkante oder der Außenkante und der Abströmkante abgerundet sind. Hierzu weisen die Ecken bevorzugt einen Radius von 1 mm bis 20 mm (Millimeter) auf.

Zur Verstärkung eines Aufschwimmens der Trägerlamelle auf der benachbarten Stahllamelle im offenen Kupplungszustand und/oder zur Verhinderung eines Trockenlaufens des Reibbelags im geschlossenen oder schlupfend geschlossenen Kupplungszustand können die Reibbeläge oder Reibbelagpads mit Nutkanälen versehen sein, die z. B. durch Prägen oder Entfernen von Reibbelagmaterial erzeugt sein können.

Nutkanäle in den Reibbelagpads können auch zur Verbesserung der Kühlung der Reibbelagpads und/oder zur Vermeidung von durch wiederholten Wechsel zwischen Gleit-und Haftreibungszustand während der Kupplungszuschaltung verursachtem Kupplungsrupfen vorgesehen sein.

Selbstverständlich könnte die die Reibbeläge tragende Trägerlamelle auch als Außenlamelle und ihr Reibpartner als Innenlamelle ausgeführt sein.

Insbesondere wenn die Trägerlamelle als eine mit der Antriebsseite der Kupplung (Antriebsmotor) drehfeste Außen- oder Innenlamelle und ihr Reibpartner als eine mit der Abtriebsseite drehfeste Innen- bzw. Außenlamelle ausgeführt sind, zeichnen sich die in der Beschreibung und in den Ansprüchen dieser Erfindungen genannten Merkmale als besonders wirkungsvoll für die Lösung der gestellten Aufgaben (Reduzierung der Schleppmomente, der Verlustleistung und des Verschleißes) aus.

Einem weiteren Aspekt der Erfindung folgend wird auch ein Kraftfahrzeug aufweisend einen Antriebsmotor mit einer erfindungsgemäßen Kupplung vorgeschlagen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung als auch nicht beanspruchte Varianten zeigen. Dabei sind gleiche Bauteile in den Figuren mit denselben Bezugszeichen versehen. Es zeigen schematisch:
- Fig. 1:: ein Kraftfahrzeug mit einer Kupplung
- Fig. 2:: ein erstes nicht beanspruchtes Beispiel einer Trägerlamelle einer Kupplung;
- Fig. 3:: eine Schnittdarstellung durch einen Reibbelag der Trägerlamelle des ersten Beispiels;
- Fig. 4:: ein vergrößerter Ausschnitt des Reibbelags des ersten Beispiels;
- Fig. 5: ein zweites nicht beanspruchtes Beispiel einer Trägerlamelle einer Kupplung;
- Fig. 6: eine Schnittdarstellung durch einen Reibbelag der Trägerlamelle des zweiten Beispiels;
- Fig. 7: ein drittes nicht beanspruchtes Beispiel einer Trägerlamelle einer Kupplung;
- Fig. 8:: eine Schnittdarstellung durch einen Reibbelag der Trägerlamelle des dritten Beispiels;
- Fig. 9:: ein viertes nicht beanspruchtes Beispiel einer Trägerlamelle einer Kupplung;
- Fig. 10:: ein fünftes nicht beanspruchtes Beispiel einer Trägerlamelle einer Kupplung;
- Fig. 11:: ein sechstes nicht beanspruchtes Beispiel einer Trägerlamelle einer Kupplung;
- Fig. 12:: ein siebtes nicht beanspruchtes Beispiel einer Trägerlamelle einer Kupplung;
- Fig. 13:: ein achtes nicht beanspruchtes Beispiel einer Trägerlamelle einer Kupplung;
- Fig. 14:: ein neuntes nicht beanspruchtes Beispiel einer Trägerlamelle einer Kupplung;
- Fig. 15:: eine erste Ausführungsform einer Trägerlamelle einer Kupplung;
- Fig. 16:: eine Schnittdarstellung durch einen Reibbelag der Trägerlamelle der ersten Ausführungsform;
- Fig. 17:: ein zehntes nicht beanspruchtes Beispiel einer Trägerlamelle einer Kupplung;
- Fig. 18:: ein elftes nicht beanspruchtes Beispiel einer Trägerlamelle einer Kupplung;
- Fig. 19:: eine Schnittdarstellung durch einen Reibbelag der Trägerlamelle des elften Beispiels;
- Fig. 20:: ein zwölftes nicht beanspruchtes Beispiel einer Trägerlamelle einer Kupplung;
- Fig. 21:: ein dreizehntes nicht beanspruchtes Beispiel einer Trägerlamelle einer Kupplung; und
- Fig. 22:: ein vierzehntes nicht beanspruchtes Beispiel einer Trägerlamelle einer Kupplung.

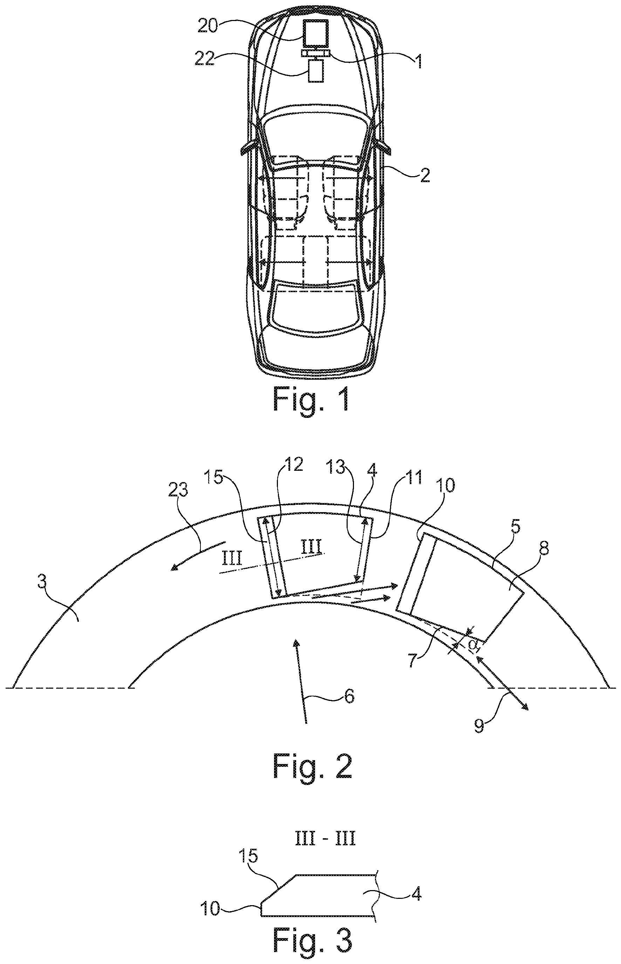

Die Fig. 1 zeigt ein Kraftfahrzeug 2 mit einem Antriebsmotor 20, einer Kupplung 1 und einem Getriebe 22. In der Fig. 2 wird ein Ausschnitt einer Trägerlamelle 3 der Kupplung 1 gezeigt. An der Trägerlamelle 3 sind eine Mehrzahl von Reibbelägen befestigt, von denen hier lediglich ein erster Reibbelag 4 und ein zweiter Reibbelag 5 gezeigt werden. Die Trägerlamelle 3 ist in der Drehrichtung 23 drehbar. Der erste Reibbelag 4 und der zweite Reibbelag 5 weisen in einer radialen Richtung 6 jeweils eine Innenkante 7 und eine Außenkante 8 auf. Die Innenkante 7 bildet mit der Umfangsrichtung 9 einen Winkel α. Weiterhin weisen der erste Reibbelag 4 und der zweite Reibbelag 5 in einer Umfangsrichtung 9 der Trägerlamelle 3 jeweils eine Anströmkante 10 und eine Abströmkante 11 auf. Die Anströmkante 10 erstreckt sich in der radialen Richtung 6 mit einer ersten Länge 12 und die Abströmkante 11 in der radialen Richtung 6 mit einer zweiten Länge 13. Die erste Länge 12 ist größer als die zweite Länge 13. Die Anströmkanten 10 des ersten Reibbelags 4 und des zweiten Reibbelags 5 weisen jeweils eine erste Anschrägung 15 auf. Durch diese Ausgestaltung werden Anströmbahnen 24 eines (Getriebe-)Öls für eine Anströmung der benachbarten Anströmkante 10 freigehalten.

Die Fig. 3 zeigt eine Schnittdarstellung entlang der in der Fig. 2 gezeigten Schnittlinie III - III. Zu erkennen ist der erster Reibbelag 4 mit der ersten Anschrägung im Bereich der Anströmkante 10.

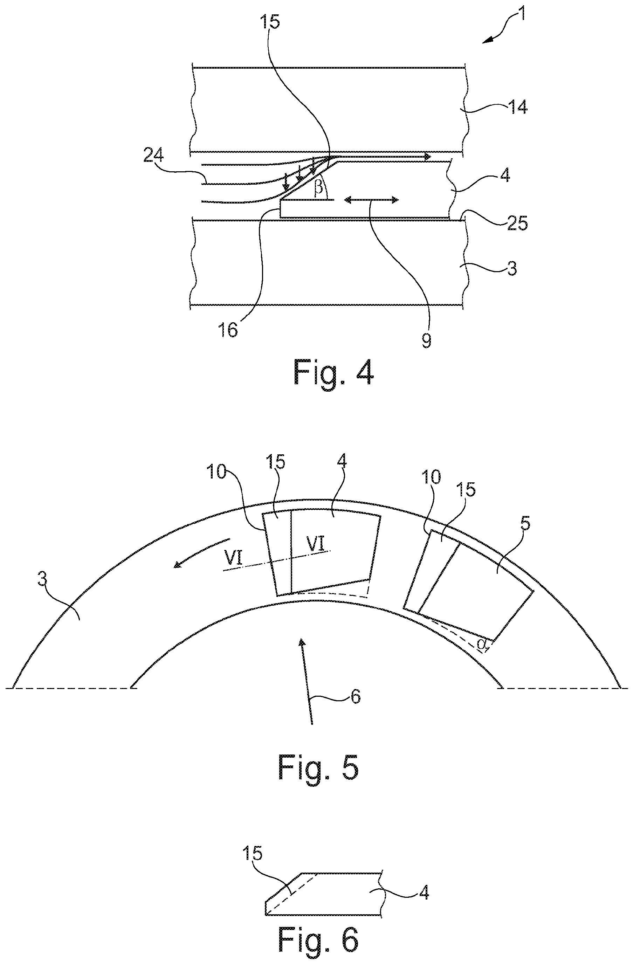

Die Fig. 4 zeigt einen vergrößerten Ausschnitt des ersten Reibbelags 4 der Fig. 2. Der erste Reibbelag 4 ist an einer Oberfläche 25 der Trägerlamelle 3 befestigt. Gezeigt wird insbesondere die Anordnung des ersten Reibbelags in einer offenen Kupplung 1 zwischen der Trägerlamelle 3 und einer Reiblamelle 14. Die erste Anschrägung 15 bildet mit der Umfangsrichtung 9 einen Winkel β. In Richtung der Trägerlamelle 3 befindet sich unter der ersten Anschrägung 15 ein Sockel 16. Die erste Anschrägung 15 lenkt im Betrieb der Kupplung 1 die Anströmbahnen 24 des (Getriebe-)Öls in Richtung der Reiblamelle 14, so dass bei geöffneter Kupplung 1 die Reiblamelle 14 durch die kinetische Energie des (Getriebe-)Öls von dem ersten Reibbelag 4 getrennt wird.

Die Fig. 5 zeigt ein zweites Beispiel einer Trägerlamelle 3 mit einem ersten Reibbelag 4 und einem zweiten Reibbelag 5. In diesem Beispiel weist die erste Anschrägung 15 der Anströmkante 10 in der radialen Richtung 6 einen variablen Verlauf auf. Insbesondere vergrößert sich die erste Anschrägung 15 radial nach außen.

Die Fig. 6 zeigt eine Schnittdarstellung entlang der in der Fig. 5 gezeigten Schnittlinie IV - IV. Zu erkennen ist insbesondere die erste Anschrägung 15 des ersten Reibbelags 4, wobei die verdeckte äußere Kante der ersten Anschrägung 15 gestrichelt dargestellt ist.

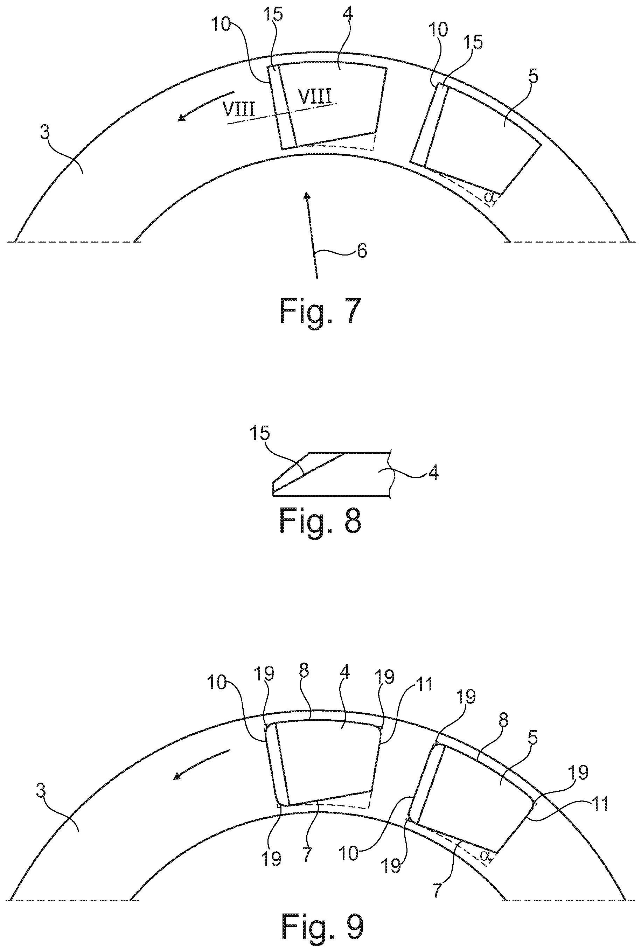

Die Fig. 7 zeigt ein drittes Beispiel einer Trägerlamelle 3 mit einem ersten Reibbelag 4 und einem zweiten Reibbelag 5. In diesem Beispiel weist die erste Anschrägung 15 der Anströmkante 10 in der radialen Richtung 6 ebenfalls einen variablen Verlauf auf. Insbesondere verkleinert sich die erste Anschrägung 15 radial nach außen, wobei sie gleichzeitig steiler wird.

Die Fig. 8 zeigt eine Schnittdarstellung entlang der in der Fig. 6 gezeigten Schnittlinie VIII-VIII. Zu erkennen ist insbesondere die erste Anschrägung 15 mit dem nach radial außen grö-ßer werdendem Winkel β des ersten Reibbelags 4.

Die Fig. 9 zeigt ein viertes Beispiel einer Trägerlamelle 3 mit einem ersten Reibbelags 4 und einem zweiten Reibbelag 5. In diesem Beispiel sind Ecken 19 zwischen der Innenkante 7 und der Anströmkante 10, zwischen der Anströmkante 10 und der Außenkante 8 und zwischen der Außenkante 8 und der Abströmkante 11 abgerundet.

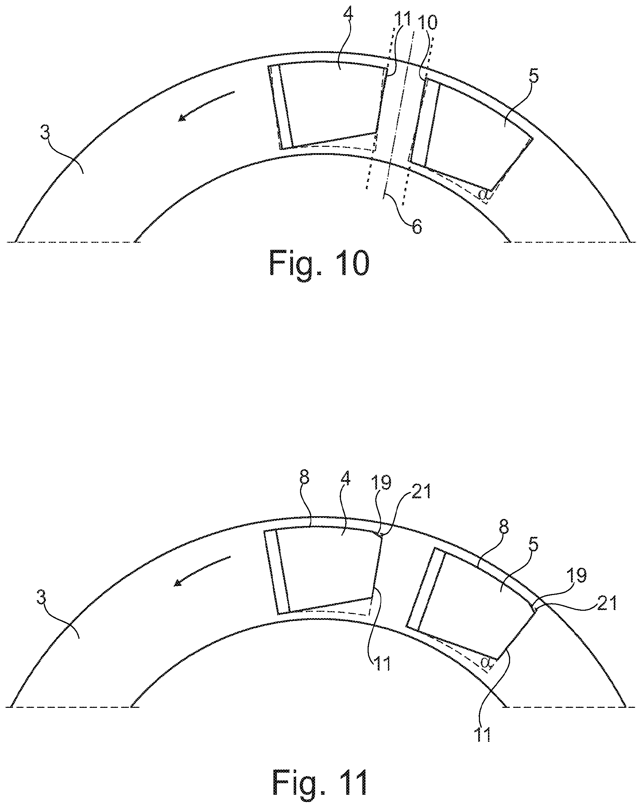

Die Fig. 10 zeigt ein fünftes Beispiel einer Trägerlamelle 3 mit einem ersten Reibbelag 4 und einem zweiten Reibbelag 5. Die Abströmkante 11 des ersten Reibbelags 4 und die Anströmkante 10 des benachbarten zweiten Reibbelags 5 verlaufen parallel zueinander und parallel zu der radialen Richtung 6.

Die Fig. 11 zeigt ein sechstes Beispiel einer Trägerlamelle 3 mit einem ersten Reibbelag 4 und einem zweiten Reibbelag 5. In diesem Beispiel sind die Ecken 19 zwischen der Außenkante 8 und der Abströmkante 11 angeschrägt.

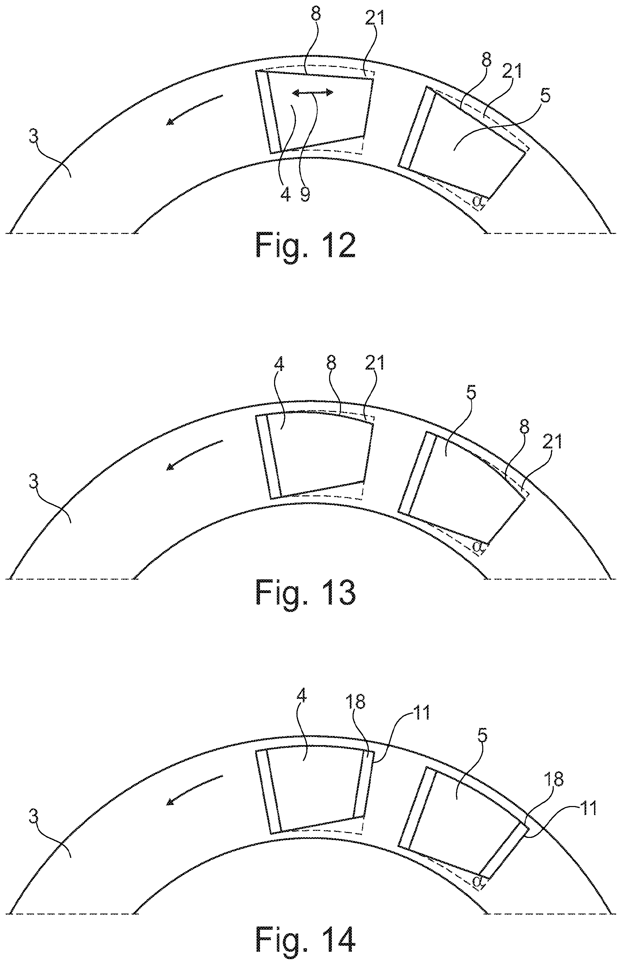

Die Fig. 12 zeigt ein siebtes Beispiel einer Trägerlamelle 3 mit einem ersten Reibbelag 4 und einem zweiten Reibbelag 5. Die Außenkante 8 ist in diesem Beispiel ebenfalls zur Umfangsrichtung 9 schräg ausgebildet und weist optional eine zweite Prägung 21 zur Verschleißreduzierung der Außenkante 8 auf.

Die Fig. 13 zeigt ein achtes Beispiel einer Trägerlamelle 3 mit einem ersten Reibbelag 4 und einem zweiten Reibbelag 5. Die Außenkante 8 ist in diesem Beispiel gekrümmt ausgebildet und weist optional eine zweite Prägung 21 auf.

Die Fig. 14 zeigt ein neuntes Beispiel einer Trägerlamelle 3 mit einem ersten Reibbelag 4 und einem zweiten Reibbelag 5. Die Abströmkante 11 des ersten Reibbelags 4 und des zweiten Reibbelags 5 weisen in diesem Beispiel eine zweite Anschrägung 18 auf.

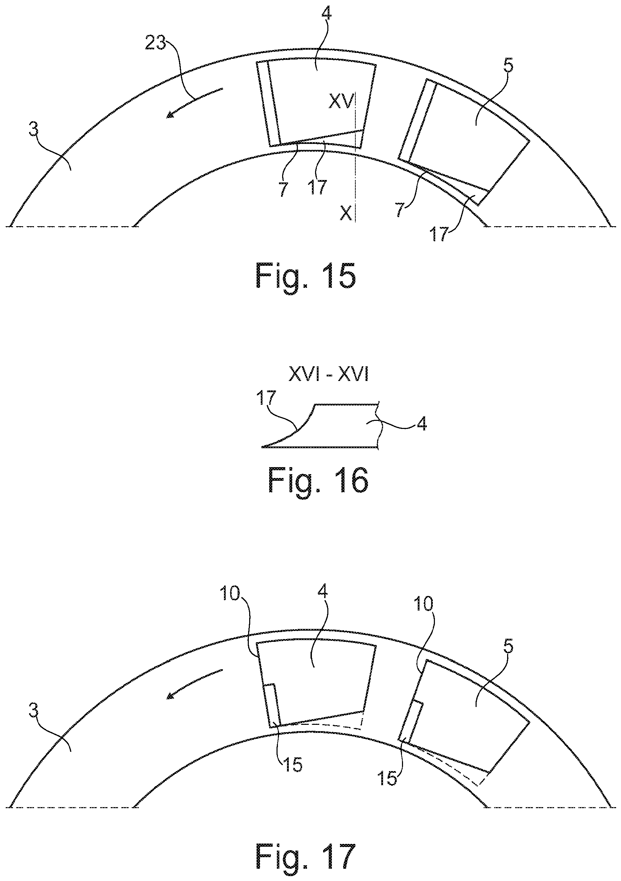

Die Fig. 15 zeigt eine erste erfindungsgemäße Ausführungsform einer Trägerlamelle 3 mit einem ersten Reibbelag 4 und einem zweiten Reibbelag 5. Die Innenkanten 7 des ersten Reibbelags 4 und des zweiten Reibbelags 5 weisen erste Prägungen 17 auf, die sich entgegen der Drehrichtung 23 der Trägerlamelle 3 vergrößern.

Die Fig. 16 zeigt eine Schnittdarstellung entlang der in der Fig. 15 gezeigten Schnittlinie XVI-XVI. Zu erkennen ist die erste Prägung 17 des ersten Reibbelags 4.

Die Fig. 17 zeigt ein Beispiel einer Trägerlamelle 3 mit einem ersten Reibbelag 4 und einem zweiten Reibbelag 5. In diesem Beispiel erstrecken sich die ersten Anschrägungen 15 der Anströmkanten 10 nicht über die gesamte Länge der Anströmkanten, sondern lediglich über 50 % der Länge der Anströmkanten.

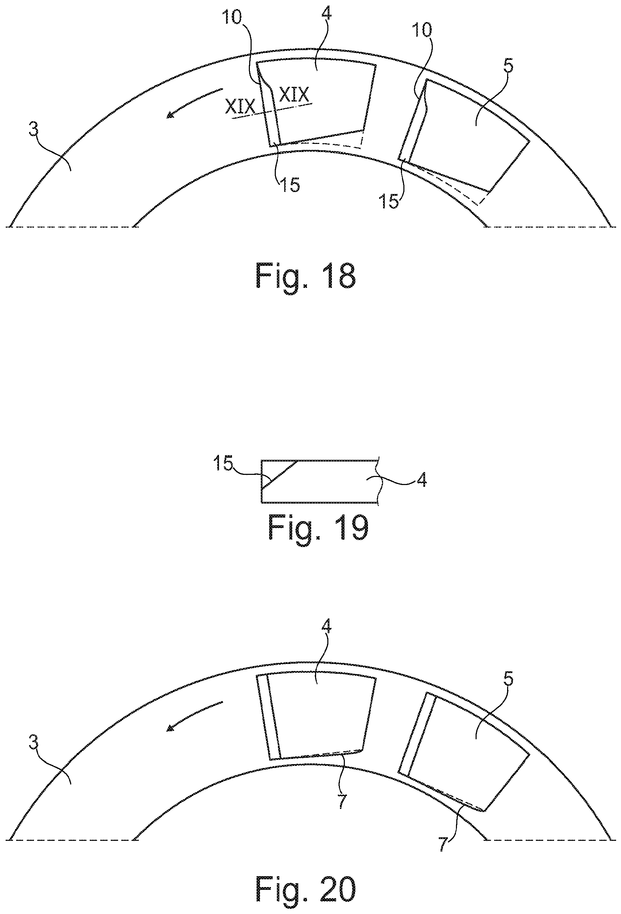

Die Fig. 18 zeigt ein Beispiel einer Trägerlamelle 3 mit einem ersten Reibbelag 4 und einem zweiten Reibbelag 5. In diesem Beispiel erstrecken sich die ersten Anschrägungen 15 der Anströmkanten 10 ebenfalls nicht über die gesamte Länge der Anströmkanten, sondern lediglich bereichsweise. Die ersten Anschrägungen 15 gehen in diesem Beispiel in die Anströmkanten 10 über.

Die Fig. 19 zeigt eine Schnittdarstellung entlang der in der Fig. 18 gezeigten Schnittlinie XIX-XIX. Zu erkennen ist die erste Anschrägung 15 des ersten Reibbelags 4.

Die Fig. 20 zeigt ein Beispiel einer Trägerlamelle 3 mit einem ersten Reibbelag 4 und einem zweiten Reibbelag 5. In diesem Beispiel sind die Innenkanten 7 konvex gekrümmt.

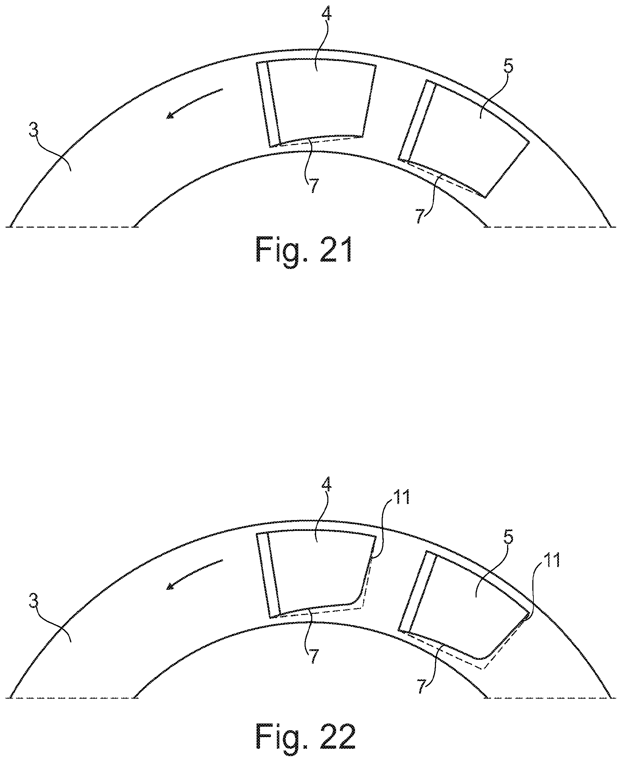

Die Fig. 21 zeigt ein Beispiel einer Trägerlamelle 3 mit einem ersten Reibbelag 4 und einem zweiten Reibbelag 5. In diesem Beispiel sind die Innenkanten 7 konkav gekrümmt.

Die Fig. 22 zeigt ein Beispiel einer Trägerlamelle 3 mit einem ersten Reibbelag 4 und einem zweiten Reibbelag 5. In diesem Beispiel gehen die Innenkanten 7 fließend in die Abströmkanten 11 über.

Die vorliegende Erfindung zeichnet sich durch geringere Schleppmomente und eine geringere Verlustleistung bei offener Kupplung sowie einen reduzierten Verschleiß aus.

### Bezugszeichenliste

- 1: Kupplung
- 2: Kraftfahrzeug
- 3: Trägerlamelle
- 4: erster Reibbelag
- 5: zweiter Reibbelag
- 6: radiale Richtung
- 7: Innenkante
- 8: Außenkante
- 9: Umfangsrichtung
- 10: Anströmkante
- 11: Abströmkante
- 12: erste Länge
- 13: zweite Länge
- 14: Reiblamelle
- 15: erste Anschrägung
- 16: Sockel
- 17: erste Prägung
- 18: zweite Anschrägung
- 19: Ecken
- 20: Antriebsmotor
- 21: zweite Prägung
- 22: Getriebe
- 23: Drehrichtung
- 24: Anströmbahn
- 25: Oberfläche

## Patentansprüche

1. Kupplung (1) für einen Antriebsstrang eines Kraftfahrzeugs (2), aufweisend eine Trägerlamelle (3) mit zumindest einem Reibbelag (4, 5), wobei der zumindest eine Reibbelag (4, 5) in einer radialen Richtung (6) der Trägerlamelle (3) eine Innenkante (7) und eine Außenkante (8) sowie in einer Umfangsrichtung (9) der Trägerlamelle (3) eine Anströmkante (10) und eine Abströmkante (11) aufweist, wobei eine erste Länge (12) der Anströmkante (10) in der radialen Richtung (6) größer ist als eine zweite Länge (13) der Abströmkante (11) in der radialen Richtung (6) und wobei die Innenkante (7) mit der Umfangsrichtung (9) einen Winkel α bildet, wobei die Innenkante (7) zumindest teilweise eine erste Prägung (17) aufweist oder die Außenkante zumindest teilweise eine zweite Prägung (21) aufweist, **dadurch gekennzeichnet, dass** die erste Prägung (17) oder die zweite Prägung (21) sich entgegen der Drehrichtung der Trägerlamelle vergrößern.

2. Kupplung (1) nach einem der vorhergehenden Patentansprüche, wobei die Anströmkante (10) zumindest teilweise eine erste Anschrägung (15) aufweist.

3. Kupplung (1) nach Patentanspruch 2, wobei die erste Anschrägung (15) mit der Umfangsrichtung (9) einen Winkel ß bildet.

4. Kupplung (1) nach einem der Patentansprüche 2 oder 3, wobei die erste Anschrägung (15) in der radialen Richtung (6) einen variablen Verlauf aufweist.

5. Kupplung (1) nach einem der Patentansprüche 2 bis 4, wobei die erste Anschrägung (15) einen Sockel (16) aufweist.

6. Kupplung (1) nach einem der vorhergehenden Patentansprüche, wobei die Abströmkante (11) eine zweite Anschrägung (18) aufweist.

7. Kupplung (1) nach einem der vorhergehenden Patentansprüche, wobei die Abströmkante (11) eines ersten Reibbelags (4) und die Anströmkante (10) eines benachbarten zweiten Reibbelags (5) parallel zueinander und parallel zu der radialen Richtung (6) verlaufen.

8. Kupplung (1) nach einem der vorhergehenden Patentansprüche, wobei Ecken (19) des zumindest einen Reibbelags (4, 5) zwischen der Innenkante (7) und der Anströmkante (10) oder zwischen der Anströmkante (10) und der Außenkante (8) oder der Außenkante (8) und der Abströmkante (11) abgerundet sind.

9. Kraftfahrzeug (2) aufweisend einen Antriebsmotor (20) mit einer Kupplung (1) gemäß einem der vorhergehenden Patentansprüche.

## Claims

1. Clutch (1) for a drivetrain of a motor vehicle (2), having a carrier lamella (3) with at least one friction lining (4, 5), wherein the at least one friction lining (4, 5) has an inner edge (7) and an outer edge (8) in a radial direction (6) of the carrier lamella (3), and has a leading edge (10) and a trailing edge (11) in a circumferential direction (9 ) of the carrier lamella (3), wherein a first length (12) of the leading edge (10) in the radial direction (6) is greater than a second length (13 ) of the trailing edge (11) in the radial direction (6), and wherein the inner edge (7) forms an angle α with the circumferential direction (9) wherein the inner edge (7) at least partially has a first embossment (17) or the outer edge at least partially has a second embossment (21), **characterized in that** the first embossment (17) or the second embossment (21) become larger reversely to the rotation direction of the carrier lamella.

2. Clutch (1) according to one of the preceding patent claims, wherein the leading edge (10) at least partially has a first bevel (15).

3. Clutch (1) according to Patent Claim 2, wherein the first bevel (15) forms an angle β with the circumferential direction (9).

4. Clutch (1) according to one of Patent Claims 2 and 3, wherein the first bevel (15) has a variable profile in the radial direction (6).

5. Clutch (1) according to one of Patent Claims 2 to 4, wherein the first bevel (15) has a pedestal (16).

6. Clutch (1) according to one of the preceding patent claims, wherein the trailing edge (11) has a second bevel (18).

7. Clutch (1) according to one of the preceding patent claims, wherein the trailing edge (11) of a first friction lining (4) and the leading edge (10) of an adjacent, second friction lining (5) run parallel to one another and parallel to the radial direction (6).

8. Clutch (1) according to one of the preceding patent claims, wherein corners (19) of the at least one friction lining (4, 5) between the inner edge (7) and the leading edge (10) or between the leading edge (10) and the outer edge (8) or the outer edge (8) and the trailing edge (11) are rounded.

9. Motor vehicle (2) having a drive motor (20) with a clutch (1) according to one of the preceding claims.

## Revendications

1. Embrayage (1) pour le train d'entraînement d'un véhicule automobile (2),
présentant une lamelle de support ( 3) dotée d'au moins une garniture de frottement (4, 5),
la ou les garnitures de frottement (4, 5) présentant un bord intérieur (7) et un bord extérieur ( 8) dans une direction radiale ( 6) de la lamelle de support (3) ainsi qu'un bord d'attaque (10) et un bord de fuite (11) dans la direction périphérique (9) de la lamelle de support (3),
une première longueur (12) du bord d'attaque (10) étant plus grande dans la direction radiale (6) qu'une deuxième longueur (13) du bord de fuite (11) dans la direction radiale (6) et le bord intérieur (7) formant un angle α avec la direction périphérique (9),
au moins une partie du bord intérieur (7) présente un premier gaufrage (17) ou au moins une partie du bord extérieur présente un deuxième gaufrage (21),
**caractérisé en ce que** le premier gaufrage (17) ou le deuxième gaufrage (21) s'agrandit dans le sens inverse du sens de rotation de la lamelle de support.

2. Embrayage (1) selon la revendication précédente, dans lequel au moins une partie du bord d'attaque (10) présente une première pente (15).

3. Embrayage (1) selon la revendication 2, dans lequel la première pente (15) forme un angle β avec la direction périphérique (9).

4. Embrayage (1) selon l'une des revendications 2 ou 3, dans lequel la première pente (15) s'étend de manière variable dans la direction radiale (6).

5. Embrayage (1) selon l'une des revendications 2 à 4, dans lequel la première pente (15) présente un socle (16).

6. Embrayage (1) selon l'une des revendications précédentes, dans lequel le bord de fuite (11) présente une deuxième pente (18).

7. Embrayage (1) selon l'une des revendications précédentes, dans lequel le bord de fuite (11) d'une première garniture de frottement (4) et le bord d'attaque (10) d'une deuxième garniture de frottement (5) voisine de la première s'étendent parallèlement l'un à l'autre parallèlement à la direction radiale (6).

8. Embrayage (1) selon l'une des revendications précédentes, dans lequel des sommets (19) de la ou des garnitures de frottement (4, 5) situés entre le bord intérieur (7) et le bord d'attaque (10) ou entre le bord d'attaque (10) et le bord extérieur (8) ou entre le bord extérieur (8) et le bord d'attaque (11) sont arrondis.

9. Véhicule automobile (2) présentant un moteur d'entraînement (20) doté d'un embrayage (1) selon l'une des revendications précédentes.
